# EUROPÄISCHE PATENTANMELDUNG

(11) **EP 2 194 466 A1**
(43) Veröffentlichungstag der Anmeldung: **09.06.2010**
(21) Anmeldenummer: 08020740.0
(22) Anmeldetag: 28.11.2008
(51) Int. Cl.: G06F 17/30

(54) **Verfahren und Vorrichtung zum Indexieren von Daten in einer Suchmaschine oder einer Datenbank für eine geschwindigkeitsoptimierte radiusabhängige Umkreissuche**

(71) Anmelder: SEARCHTEQ GmbH, 81673 München (DE)
(72) Erfinder: Hantke, Reimar, 82211 Herrsching (DE); Viechtbauer, Jörg, 83022 Rosenheim (DE)
(74) Vertreter: Emmerling, Friedrich

(57) **Zusammenfassung**

Es wird ein Verfahren sowie eine Vorrichtung zum Indexieren von Daten einer Datenbank beschrieben, das eine performanceoptimierte radiusabhängige Umkreissuche für Daten ermöglicht. Das erfindungsgemäße Verfahren umfasst Einteilen eines geographischen Gebietes mittels eines ersten Rasters in erste Bereiche, wobei das erste Raster einen ersten Rasterabstand aufweist, der einem ersten Radius der Umkreissuche zugeordnet ist, Erzeugen von ersten Umkreissuchebereichen in Abhängigkeit des ersten Rasterabstandes und des ersten Radius, wobei jedem der ersten Bereiche ein entsprechender erster Umkreissuchebereich zugeordnet ist, Zuweisen eines ersten Index zu den ersten Umkreissuchebereichen, wobei jedem der ersten Umkreissuchebereiche ein Indexelement des ersten Index zugewiesen wird, Bestimmen derjenigen ersten Umkreissuchebereiche, in denen ein spezifischer geographischer Ort liegt, auf den sich ein spezifisches Datenelement bezieht, und Zuordnen der Indexelemente der bestimmten ersten Umkreissuchebereiche zu dem Datenelement.

## Beschreibung

Die Erfindung betrifft ein Verfahren sowie eine Vorrichtung zum Indexieren von Daten in einer Suchmaschine oder Datenbanken und, um eine radiusabhängige Umkreissuche performant zu ermöglichen.

Suchmaschinen sind spezielle Rechnersysteme bzw. spezielle Softwareanwendungen, die auf Rechenanlagen laufen, für die Suche nach Webseiten oder anderen Informationen, die bestimmte, von einem Benutzer eingegebene Suchkriterien erfüllen. Hierfür bevorraten die Suchmaschinen große Datenbestände, auf die dann entsprechend einer Anfrage eines Benutzers zugegriffen wird. Unterstützt werden Suchmaschinen typischerweise durch sogenannte Crawler, die automatisch das Internet nach entsprechenden Informationen durchsuchen, kategorisieren und für die Ablage in der Datenbank der Suchmaschine bereitstellen.

Je nach Art der Suchmaschine kann beispielsweise eine Suchmaschine dafür verwendet werden, um Informationen über eine Autowerkstatt bzw. eine Apotheke in einer bestimmten Stadt zu erhalten. Von besonderem Interesse ist bei einer solchen Suchmaschinenanfrage, Informationen darüber zu erhalten, welche Autowerkstatt bzw. welche Apotheke einem bestimmten Standort am nächsten liegt. Ähnlich informativ ist es, in Erfahrung zu bringen, welche Hotels einer bestimmten Kategorie innerhalb eines bestimmten Radius um einen vorher bestimmten Standort liegen. Diese Art der Suche wird auch Umkreissuche genannt. Auf diese Art und Weise kann der Benutzer einer solchen Suchmaschine gezielte Informationen rund um einen speziellen Standort erhalten.

Aufgrund der hohen Aussagekraft solcher "Umkreisanfragen" bieten immer mehr, meist lokale Suchmaschinen die Möglichkeit an, die Ergebnisse von Suchanfragen mittels geographischer Zusatzinformationen zusätzlich zu filtern, z.B. nach "Treffern" die in einem bestimmen Umreis um einen bestimmten Standort liegen.

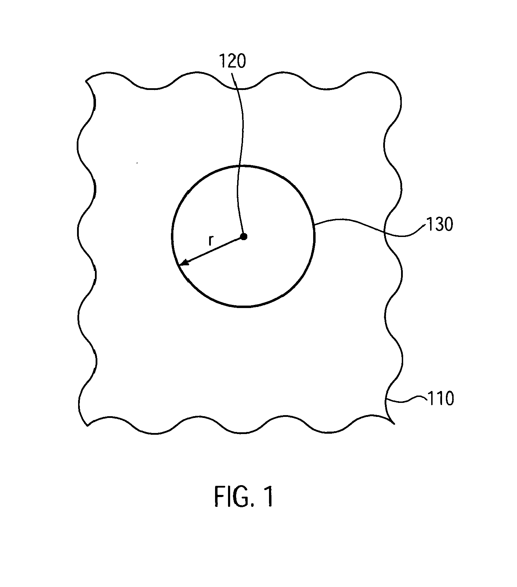

Figur 1 zeigt schematisch, wie die Suchergebnisse einer Suchanfrage an eine Suchmaschine auf einen Umkreis eines geographischen Standortes 120 eingeschränkt werden können. Um eine solche Suchanfrage mit einem bestimmten Suchkriterium zu beantworten, wird von der Suchmaschine in einem Index oder einer Datenbank nach Informationen gesucht, die einem bestimmten geographischen Gebiet 110 zugeordnet sind und in der Nähe eines spezifizierten Standortes 120 liegen. Typischerweise wird für eine solche Datenbankanfrage ein bestimmter Radius 130 angegeben, innerhalb dem die Treffer zu liegen haben, die das gewünschte Suchkriterium erfüllen. So kann z.B. über eine Suchmaschine im Index oder in der nachgelagerten Datenbank abgefragt werden, welche bestimmten Geschäfte oder Sehenswürdigkeiten in dem geographischen Gebiet 110 innerhalb eines bestimmten Radius 130 um den geographischen Standortes 120 liegen. Die Suchtreffer können dann entsprechend dem Abstand zu dem geographischen Standort 120 sortiert angezeigt werden. Dementsprechend kann bei einer solchen Suchmaschine z.B. abgefragt werden, welche Museen im Umkreis von 1 km um den Marienplatz in München liegen.

Solche Umkreissuchen beziehen sich typischerweise nicht nur auf Suchtreffer, die in einem bestimmten kreisförmigen Bereich um den geographischen Standort 120 liegen. Der Begriff "Umkreis" ist dabei nicht unbedingt wörtlich zu nehmen. So können sich Umkreissuchen auf jegliche Merkmale beziehen, die eine bestimmte geographische Zuordnung erlauben. So kann sich eine Umkreissuche z. B. auch auf Postleitzahlen stützen. Sie können sich auch auf einen bestimmten nicht runden, also z.B. auch rechteckigen oder quadratischen Bereich mit einer bestimmten Kantenlänge um den geographischen Standort 120 beziehen.

Damit solche ortsbezogenen Suchanfragen bearbeitet werden können, müssen im Index oder in den Datenbanksystemen gespeicherten Informationen geographische Daten wie z.B. Postleitzahl oder Längen- und Breitengrad zugeordnet sein. Ist der im Index oder in dem Datenbanksystem abgespeicherten Information z.B. eine Adresse zugeordnet, so kann dieser Adresse mittels einer kommerziellen Datenbank, die sogenannte geokodierte Informationen zur Verfügung stellt, ein Längen- und Breitengrad zugeordnet werden. Dieser Längen- und Breitengradsangaben können dann für die oben erwähnte Umkreissuche herangezogen werden, um zu ermitteln, welche Informationen sich auf Orte beziehen, die um den spezifizierten Standort 120 liegen.

Bei dem oben erwähnten Beispiel für eine Umkreissuche werden den Informationen über die Museen zusätzlich z. B. Längen- und Breitengradsangaben zugeordnet. Als Ergebnis einer entsprechenden Suchmaschinenanfrage, können dann alle Museen als Ergebnis angezeigt werden, deren Längen- und Breitengradangabe innerhalb eines Radius von 1 km um den Marienplatz liegen.

Konventionelle Suchmaschinen und Verzeichnisse suchen in diesem Umkreis meist nur in einer relativ kleinen Datenmenge (Name, Branche, ..). Wenn man jedoch alle Inhalte einer Webseite, also meist mehr als tausend oder tausende Worte georeferenziert durchsuchen will, steigt der Abfrageaufwand immens. Bei der hohen Anzahl von Benutzerzugriffen pro Sekunde, wie sie für bekannte Suchmaschinen üblich sind, können daher vermehrte Suchanfragen mit Umkreissuche zu Problemen bei der Rechnerkapazität der Suchmaschine führen, wenn diese sehr große Datenmengen zu durchsuchen sind.

In diesem Zusammenhang beschreibt EP 1 533 721 A2 ein Verfahren und Gerät für eine effiziente Näherungssuche. Hierzu wird einer maßgeblichen Population von Punkten in einem Gebiet ein räumlicher Schlüssel zugewiesen. Außerdem wird eine Reihe von Attributen erzeugt und jedes Attribut einer Teilmenge von räumlichen Schlüsseln zugeordnet, die einer Teilmenge von Punkten entsprechen, zu denen jedes Attribut passt. Dabei umfasst das Zuordnen von jedem Attribut das Teilen des Gebiets in eine Vielzahl von Regionen und das Erzeugen einer Bitmap, die kennzeichnet, welche Regionen einen Punkt enthalten, zu dem jedes der Attribute passt.

Es ist daher Aufgabe der Erfindung, ein performantes Verfahren zum Indexieren von Daten eines Index oder einer Datenbank sowie eine entsprechende Vorrichtung anzugeben, das eine effiziente radiusabhängige Umkreissuche für eine Vielzahl von Suchanfragen auf einer sehr großen Datenbasis ermöglicht.

Die Aufgabe der vorliegenden Erfindung wird durch den Gegenstand der unabhängigen Patentansprüche gelöst. Gegenstand der abhängigen Patentansprüche sind bevorzugte Ausführungsformen.

Gemäß einer bevorzugten Ausführungsform der Erfindung wird ein Verfahren zum Zuweisen eines Index zu Daten einer Datenbank angegeben, das das Zuweisen eines ersten Index zu ersten, geographischen Suchbereichen, wobei jedem der ersten geographischen Suchbereiche ein Indexelement des ersten Index zugewiesen wird, das Bestimmen derjenigen ersten geographischen Suchbereiche, in denen ein spezifischer geographischer Ort liegt, auf den sich ein spezifisches Datenelement bezieht, und das Zuordnen der Indexelemente der bestimmten, ersten, geographischen Suchbereichen zu dem Datenelement umfasst.

Gemäß einer vorteilhaften Weiterbildung der bevorzugten Ausführungsform der Erfindung umfasst das Verfahren insbesondere das Indexieren von Daten eines Index oder einer Datenbank angegeben, das eine radiusabhängige Umkreissuche ermöglicht. Das erfindungsgemäße Verfahren umfasst dabei Einteilen eines geographischen Gebietes mittels eines ersten Rasters in erste Bereiche, wobei das erste Raster einen ersten Rasterabstand aufweist, der einem ersten Radius der Umkreissuche zugeordnet ist, Erzeugen von ersten Umkreissuchebereichen in Abhängigkeit des ersten Rasterabstandes und des ersten Radius, wobei jedem der ersten Bereiche ein entsprechender erster Umkreissuchebereich zugeordnet ist, Zuweisen eines ersten Index zu den ersten Umkreissuchebereichen, wobei jedem der ersten Umkreissuchebereiche ein Indexelement des ersten Index zugewiesen wird, Bestimmen derjenigen ersten Umkreissuchebereiche, in denen ein spezifischer geographischer Ort liegt, auf den sich ein spezifisches Datenelement bezieht, und Zuordnen der Indexelemente der bestimmten ersten Umkreissuchebereiche zu dem Datenelement.

Gemäß einer weiteren vorteilhaften Weiterbildung der bevorzugten Ausführungsform der Erfindung umfasst das Verfahren des Weiteren Einteilen des geographischen Gebietes mittels eines zweiten Rasters in zweite Bereiche, wobei das zweite Raster einen zweiten Rasterabstand aufweist, der einem zweiten Radius der Umkreissuche zugeordnet ist, Erzeugen von zweiten Umkreissuchebereichen in Abhängigkeit des zweiten Rasterabstandes und des zweiten Radius, wobei jedem der zweiten Bereiche ein entsprechender zweiter Umkreissuchebereich zugeordnet ist, Zuweisen eines zweiten Index zu den zweiten Umkreissuchebereichen, wobei jedem der zweiten Umkreissuchebereiche ein Indexelement des zweiten Index zugewiesen wird, Bestimmen derjenigen zweiten Umkreissuchebereiche, in denen der spezifische geographische Ort liegt, und Zuordnen der Indexelemente der bestimmten zweiten Umkreissuchebereiche zu dem Datenelement.

Bevorzugterweise ist dabei das erste Raster ein quadratisches Raster und erstreckt sich der dem jeweiligen ersten Bereich zugeordnete erste Umkreissuchebereich über den jeweiligen ersten Bereich auf allen vier Seiten um Länge des ersten Radius. Ebenso ist das zweite Raster bevorzugterweise ein quadratisches Raster und erstreckt sich der dem jeweiligen zweiten Bereich zugeordnete zweite Umkreissuchebereich über den jeweiligen zweiten Bereich auf allen vier Seiten um Länge des zweiten Radius. Der erste Rasterabstand ist dabei bevorzugterweise gleich dem ersten Radius der Umkreissuche und/oder der zweite Rasterabstand gleich dem zweiten Radius der Umkreissuche ist.

Gemäß einer weiteren vorteilhaften Weiterbildung des erfindungsgemäßen Verfahrens umfasst der erste und/oder zweite Index Angaben, die sich auf den dem Radius zugeordneten Rasterabstand und eine geographische Zuordnung der ersten und/oder zweiten Bereiche beziehen. Jedem der für die radiusabhängige Umkreissuche verwendeten Radien ist bevorzugterweise jeweils ein Raster mit einem entsprechenden Rasterabstand zugeordnet. Das Datenelement ist dabei Teil eines Datensatzes einer Adressdatenbank oder Teil eines Datensatzes ist, der mit einer Adressdatenbank verknüpft ist. Zusätzlich können den ersten und/oder zweiten Bereichen jeweils Bilddaten zugeordnet sein, die geographische Gebiete repräsentieren, die den ersten und/oder zweiten Bereichen mittels Einteilung durch das erste und/oder zweite Raster zugeordnet sind.

Gemäß einer bevorzugten Ausführungsform der Erfindung wird eine Vorrichtung zum Indexieren von Daten eines Index oder einer Datenbank angegeben, die eine radiusabhängige Umkreissuche ermöglicht. Die erfindungsgemäße Vorrichtung umfasst dabei eine Einrichtung zum Einteilen eines geographischen Gebietes mittels eines ersten Rasters in erste Bereiche, wobei das erste Raster einen ersten Rasterabstand aufweist, der einem ersten Radius der Umkreissuche zugeordnet ist, eine Einrichtung zum Erzeugen von ersten Umkreissuchebereichen in Abhängigkeit des ersten Rasterabstandes und des ersten Radius, wobei die Einrichtung zum Erzeugen von ersten Umkreissuchebereichen eingerichtet ist, jedem der ersten Bereiche einen entsprechenden ersten Umkreissuchebereich zuzuordnen, eine Einrichtung zum Zuweisen eines ersten Index zu den ersten Umkreissuchebereichen, wobei die Einrichtung zum Zuweisen eingerichtet ist, jedem der ersten Umkreissuchebereiche ein Indexelement des ersten Index zuzuweisen, sowie eine Einrichtung zum Bestimmen derjenigen ersten Umkreissuchebereiche, in denen ein spezifischer geographischer Ort liegt, auf den sich ein spezifisches Datenelement bezieht, und zum Zuweisen der Indexelemente der bestimmten ersten Umkreissuchebereiche zu dem Datenelement.

Bevorzugterweise ist die Einrichtung zum Einteilen zusätzlich dazu eingerichtet, das geographische Gebiet mittels eines zweiten Rasters in zweite Bereiche einzuteilen, wobei das zweite Raster einen zweiten Rasterabstand aufweist, der einem zweiten Radius der Umkreissuche zugeordnet ist, wobei die Einrichtung zum Erzeugen von ersten Umkreissuchebereichen zusätzlich dazu eingerichtet ist zweite Umkreissuchebereiche in Abhängigkeit des zweiten Rasterabstandes und des zweiten Radius zu erzeugen, wobei jedem der zweiten Bereiche ein entsprechender zweiter Umkreissuchebereich zugeordnet ist, wobei die Einrichtung zum Zuweisen zusätzlich dazu eingerichtet ist, einen zweiten Index zu den zweiten Umkreissuchebereichen zuzuweisen, wobei jedem der zweiten Umkreissuchebereiche ein Indexelement des zweiten Index zugeordnet wird, und wobei die Einrichtung zum Bestimmen der ersten Umkreissuchebereiche zusätzlich dazu eingerichtet ist, diejenigen zweiten Umkreissuchebereiche zu bestimmen, in denen der spezifische geographische Ort liegt, und die Indexelemente der bestimmten zweiten Umkreissuchebereiche dem Datenelement zuzuordnen.

Gemäß einer Weiterbildung der bevorzugten Ausführungsform der Vorrichtung ist das erste Raster ein quadratisches Raster und erstreckt sich der dem jeweiligen ersten Bereich zugeordnete erste Umkreissuchebereich über den jeweiligen ersten Bereich auf allen vier Seiten um Länge des ersten Radius. Auch das zweite Raster ist bevorzugterweise ein quadratisches Raster und der dem jeweiligen zweiten Bereich zugeordnete zweite Umkreissuchebereich erstreckt sich über den jeweiligen zweiten Bereich auf allen vier Seiten um Länge des zweiten Radius. Bevorzugterweise ist der erste Rasterabstand gleich dem ersten Radius der Umkreissuche und/oder der zweite Rasterabstand gleich dem zweiten Radius der Umkreissuche, wobei der erste und/oder zweite Index Angaben umfasst, die sich auf den dem Radius zugeordneten Rasterabstand und eine geographische Zuordnung der ersten und/oder zweiten Bereiche beziehen. Jedem der für die radiusabhängige Umkreissuche verwendeten Radien ist jeweils ein Raster mit einem entsprechenden Rasterabstand zugeordnet.

Gemäß einer alternativen Ausführungsform der Erfindung wird ein Verfahren zum Indexieren von Daten eines Index oder einer Datenbank angegeben, das eine radiusabhängige Umkreissuche ermöglicht. Die alternative Ausführungsform des Verfahrens umfasst das Einteilen eines geographischen Gebietes mittels eines ersten Rasters in erste Bereiche, wobei das erste Raster einen ersten Rasterabstand aufweist, der einem ersten Radius der Umkreissuche zugeordnet ist, das Zuweisen eines ersten Index zu den ersten Bereichen, wobei jedem der ersten Bereiche ein Indexelement des ersten Index zugeordnet wird, und das Zuweisen des Indexelements eines spezifischen ersten Bereichs und der Indexelemente der an den spezifischen ersten Bereich angrenzenden ersten Bereiche zu einem Datenelement, das sich auf eine geographische Lage bezieht, die in dem spezifischen ersten Bereich liegt.

Bevorzugterweise umfasst die alternative Ausführungsform des Verfahrens zusätzlich das Einteilen eines geographischen Gebietes mittels eines zweiten Rasters in zweite Bereiche, wobei das zweite Raster einen zweiten Rasterabstand aufweist, der einem zweiten Radius der Umkreissuche zugeordnet ist, das Zuweisen eines zweiten Index zu den zweiten Bereichen, wobei jedem der zweiten Bereiche ein Indexelement des zweiten Index zugeordnet wird, und das Zuweisen des Indexelements eines spezifischen zweiten Bereichs und der Indexelemente der an den spezifischen zweiten Bereich angrenzenden zweiten Bereiche zu dem Datenelement, wobei die geographische Lage, auf die sich das Datenelement bezieht, in dem spezifischen zweiten Bereich liegt.

Gemäß einer Weiterbildung der alternativen Ausführungsform des Verfahrens ist der erste Rasterabstand gleich dem ersten Radius der Umkreissuche und/oder der zweite Rasterabstand gleich dem zweiten Radius der Umkreissuche. Bevorzugterweise werden dem Datenelement die Indexelemente aller der an den spezifischen ersten und/oder zweiten Bereich direkt angrenzenden ersten und/oder zweiten Bereiche zugeordnet.

Das erste und/oder zweite Raster ist bevorzugterweise ein quadratisches Raster und der erste und/oder zweite Index umfasst bevorzugterweise Angaben, die sich auf den dem Radius zugeordneten Rasterabstand und eine geographische Zuordnung der ersten und/oder zweiten Bereiche beziehen. Jedem der für die radiusabhängige Umkreissuche verwendeten Radien ist jeweils ein Raster mit einem entsprechenden Rasterabstand zugeordnet, wobei der Rasterabstand des jeweiligen Rasters gleich dem zugeordneten Radius entspricht. Das Datenelement ist dabei Teil eines Datensatzes einer Adressdatenbank ist oder Teil eines Datensatzes, der mit einer Adressdatenbank verknüpft ist.

Gemäß einer weiteren alternativen Ausführungsform der Erfindung wird eine Vorrichtung zum Zuweisen eines Index zu Daten einer Datenbank, angegeben, die eine Einrichtung zum Zuweisen eines ersten Index zu den ersten geographischen Suchebereichen, wobei die Einrichtung zum Zuweisen eingerichtet ist, jedem der ersten geographischen Suchebereiche ein Indexelement des ersten Index zuzuweisen, und eine Einrichtung zum Bestimmen derjenigen ersten geographischen Suchebereiche, in denen ein spezifischer geographischer Ort liegt, auf den sich ein spezifisches Datenelement bezieht, und zum Zuweisen der Indexelemente der bestimmten ersten geographischen Suchebereiche zu dem Datenelement, umfasst.

Insbesondere dient die bevorzugte Ausführungsform der Vorrichtung zum Indexieren von Daten eines Index oder einer Datenbank und ermöglicht somit eine radiusabhängige Umkreissuche. Diese bevorzugte Ausführungsform der Vorrichtung umfasst eine Einrichtung zum Einteilen eines geographischen Gebietes mittels eines ersten Rasters in erste Bereiche, wobei das erste Raster einen ersten Rasterabstand aufweist, der einem ersten Radius der Umkreissuche zugeordnet ist, eine Einrichtung zum Zuweisen eines ersten Index zu den ersten Bereichen, wobei jedem der ersten Bereiche ein Indexelement des ersten Index zugeordnet wird, und eine Einrichtung zum Zuweisen des Indexelements eines spezifischen ersten Bereichs und der Indexelemente der an den spezifischen ersten Bereich angrenzenden ersten Bereiche zu einem Datenelement, das sich auf eine geographische Lage bezieht, die in dem spezifischen ersten Bereich liegt. Bevorzugterweise ist die Einrichtung zum Einteilen des geographischen Gebietes zusätzlich dazu eingerichtet, das geographische Gebiet mittels eines zweiten Rasters in zweite Bereiche einzuteilen, wobei das zweite Raster einen zweiten Rasterabstand aufweist, der einem zweiten Radius der Umkreissuche zugeordnet ist, die Einrichtung zum Zuweisen eines ersten Index zusätzlich dazu eingerichtet ist, einen zweiten Index zu den zweiten Bereichen zuzuweisen, wobei jedem der zweiten Bereiche ein Indexelement des zweiten Index zugeordnet wird, und die Einrichtung zum Zuweisen des Indexelements zusätzlich dazu eingerichtet ist, das Indexelements eines spezifischen zweiten Bereichs und der Indexelemente der an den spezifischen zweiten Bereich angrenzenden zweiten Bereiche zu dem Datenelement zuzuweisen, wobei die geographische Lage, auf die sich das Datenelement bezieht, in dem spezifischen zweiten Bereich liegt.

Gemäß einer Weiterbildung der alternativen Ausführungsform der Vorrichtung ist der erste Rasterabstand gleich dem ersten Radius der Umkreissuche und/oder der zweite Rasterabstand gleich dem zweiten Radius der Umkreissuche. Die Einrichtung zum Zuweisen des Indexelements ist dabei zusätzlich dazu eingerichtet, dem Datenelement die Indexelemente aller der an den spezifischen ersten und/oder zweiten Bereich direkt angrenzenden ersten und/oder zweiten Bereiche zuzuordnen.

Bevorzugterweise ist das erste und/oder zweite Raster ein quadratisches Raster und umfasst der erste und/oder zweite Index Angaben, die sich auf den dem Radius zugeordneten Rasterabstand und eine geographische Zuordnung der ersten und/oder zweiten Bereiche beziehen.

Das erfindungsgemäße Verfahren sowie die erfindungsgemäße Vorrichtung erlauben eine äußerst performante radiusabhängige Umkreissuche, da auf Grund der geschickten Indexierung der Daten nur eine verkleinerte Datenmenge mit wenigen Operationen und ein Minimum an Operanden notwendig sind, um eine radiusabhängige Umkreissuche in einer Datenbank durchzuführen. Damit ermöglicht die erfindungsgemäße Indexierung der Datenelemente, dass eine Vielzahl von gleichzeitigen Benutzeranfragen bewältigen kann. Da für die Umkreissuche nur eine geringe Anzahl von Operationen und Operanden notwendig ist, wird die für die Beantwortung der Suchanfragen benötigte Rechenleistung deutlich reduziert. Die Betreiberkosten für die Suchmaschine können so gesenkt werden.
- Figur 1: zeigt schematisch eine Umkreissuche nach dem Stand der Technik.
- Figur 2: zeigt ein Suchmaschinensystem mit einer Indexiervorrichtung gemäß einer bevorzugten Ausführungsform der vorliegenden Erfindung.
- Figur 3: zeigt schematisch das Verfahren gemäß der bevorzugten Ausführungsform der vorliegenden Erfindung.
- Figur 4: zeigt in einer schematischen Darstellung den Schritt des Einteilens eines geographischen Gebietes mittels eines Rasters gemäß der bevorzugten Ausführungsform der vorliegenden Erfindung.
- Figur 5a: zeigt in einer schematischen Darstellung den Schritt des Erzeugens von Umkreissuchebereichen gemäß der bevorzugten Ausführungsform der vorliegenden Erfindung.
- Figur 5b: zeigt in einer schematischen Darstellung den Schritt des Erzeugens von Umkreissuchebereichen gemäß einer besonders bevorzugten Ausführungsform der vorliegenden Erfindung.
- Figur 6: zeigt in einer schematischen Darstellung den Schritt des Zuweisens eines Index zu den ersten Umkreissuchebereichen gemäß der bevorzugten Ausführungsform der vorliegenden Erfindung.
- Figur 7: zeigt in einer schematischen Darstellung den Schritt des Bestimmens der Umkreissucheberreiche gemäß der bevorzugten Ausführungsform der vorliegenden Erfindung.
- Figur 8: zeigt die Indexiervorrichtung gemäß der bevorzugten Ausführungsform im Detail.
- Figur 9: zeigt schematisch das Durchführen einer Umkreissuche gemäß der besonders bevorzugten Ausführungsform der vorliegenden Erfindung.

Nachfolgend wird die vorliegende Erfindung anhand mehrerer Ausführungsbeispiele im Detail beschrieben.

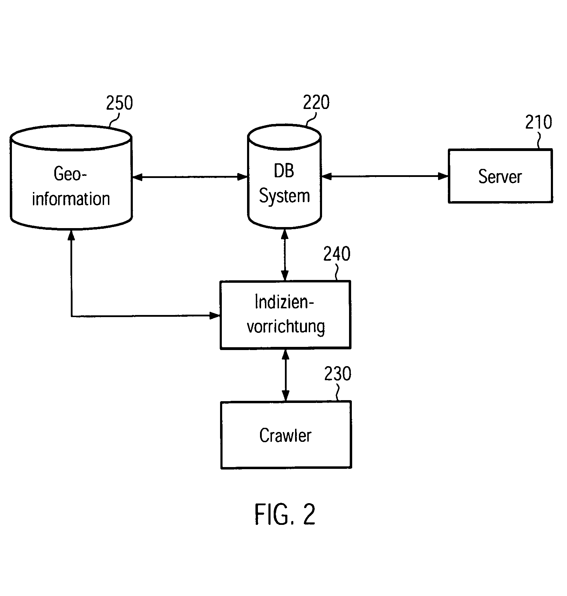

Figur 2 zeigt eine schematische Darstellung eines Suchmaschinensystems 200 mit einer Indexiervorrichtung 240 gemäß einer bevorzugten Ausführungsform der vorliegenden Erfindung. Das Suchmaschinensystem 200 wird typischerweise mittels eines Rechnersystems implementiert, wobei das Rechnersystem üblicherweise über eine Verbindung zum Internet verfügt. Bevorzugterweise besteht das Suchmaschinensystem aus einem Server 210, der mit einem Index / Datenbanksystem 220 verbunden ist.

Auf dem Server 210 ist eine entsprechende Softwareanwendung installiert, in der die Funktionen für die Suchmaschine implementiert sind. Bevorzugterweise handelt es sich bei der Softwareanwendung um einen sogenannten Application Server, der mit entsprechenden Schnittstellen für Datenbankanfragen ausgestattet ist. Der Server 210 ist bevorzugterweise mit dem Internet verbunden, um über eine entsprechende Schnittstelle Benutzeranfragen von einer Vielzahl von Benutzern zu empfangen. Bevorzugterweise werden die Suchanfragen der Benutzer über das Hypertext Transfer Protocol (HTTP) abgewickelt.

Der Server 210 bearbeitet die Benutzeranfragen und ruft die für die Beantwortung der Benutzeranfragen notwendigen Informationen aus dem Index / Datenbanksystem 220 ab. Bevorzugterweise handelt es sich bei dem Index / Datenbanksystem 220 um einen Suchmaschinenindex oder eine oder mehrere relationale Datenbanken, die bevorzugterweise über einen Datenbestand verfügen, der verifiziert ist bzw. von dem Betreiber des Suchmaschinensystems 200 eingepflegt wird.

Zusätzlich kann das Datenbanksystem 220 über Informationen verfügen, die automatisch über einen sogenannten Crawler 230 im Internet recherchiert und in das Datenbanksystem 220 eingepflegt werden. Bei dem Crawler 230, der auch Spider genannt wird, handelt es sich um ein Computerprogramm, das automatisch das World Wide Web durchsucht und Inhalte des World Wide Webs analysiert. Der Crawler 230 dient somit vor allem dazu, dass in dem Suchmaschinensystem 200 der Datenbestand in dem Datenbanksystem 220 erweitert bzw. auf einen aktuellen Stand gebracht wird.

Um entsprechende Benutzeranfragen effizient beantworten zu können, verfügt das Suchmaschinensystem 200 über eine erfindungsgemäße Indexiervorrichtung 240, die zumindest Teile des Datenbestandes, der in dem Datenbanksystem oder Suchmaschinenindex 220 gespeichert ist, mit einem speziellen Index versieht. Die Funktionsweise dieser erfindungsgemäßen Indexiervorrichtung 240 wird im Detail weiter unten näher erläutert.

Die Indexiervorrichtung ist bevorzugterweise mit dem Crawler 230 und dem Datenbanksystem funktional, z. B. über entsprechende Schnittstellen, verbunden.

Um die Datenbestände in dem Datenbanksystem 220 bzw. Teile davon für eine sogenannte Umkreissuche zu Indexieren, verfügt das Suchmaschinensystem 200 über ein System mit Geoinformationen, die auch Geodaten genannt werden. Bei den sogenannten Geodaten handelt es sich um digitale Informationen, denen eine bestimmte räumliche Lage auf der Erdoberfläche zugewiesen ist. Dies beinhaltet zum Beispiel den Längen- und Breitengrad eines bestimmten Ortes, z.B. auch in der Abhängigkeit von einer bestimmten Postleitzahl. Bevorzugterweise kann die Datenbank 250 auch über Bilddaten zu Landkarten von spezifischen Regionen auf der Erdoberfläche verfügen.

In einer alternativen Ausführungsform des Suchmaschinensystems 200 umfasst das Suchmaschinensystem 200 keine Datenbank 250 für Geoinformationen, dafür aber eine Schnittstelle zu einer solchen. Üblicherweise wird bei dieser alternativen Ausführungsform auf eine kommerzielle Datenbank zugegriffen, die die benötigen Geodaten zur Verfügung stellt.

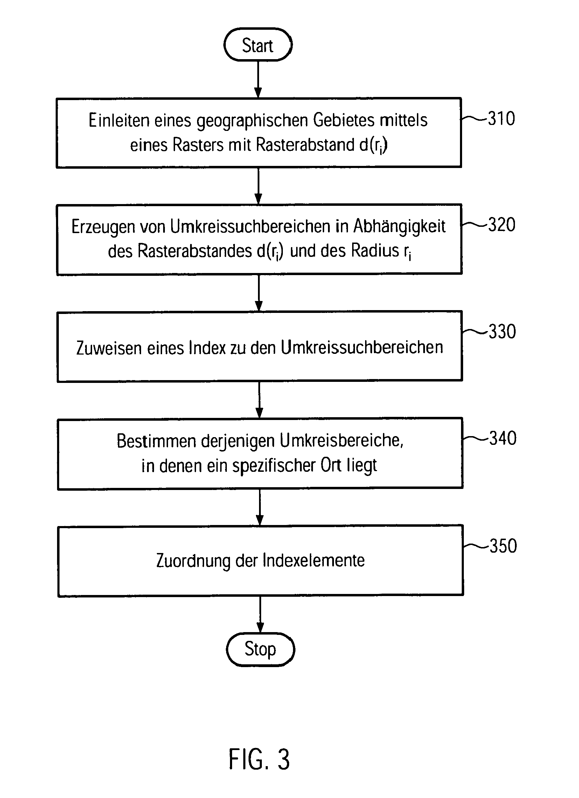

Die genaue Funktionsweise der erfindungsgemäßen Indexiervorrichtung 240 wird im Folgenden in Bezug auf Figuren 3 bis 7 näher erläutert.

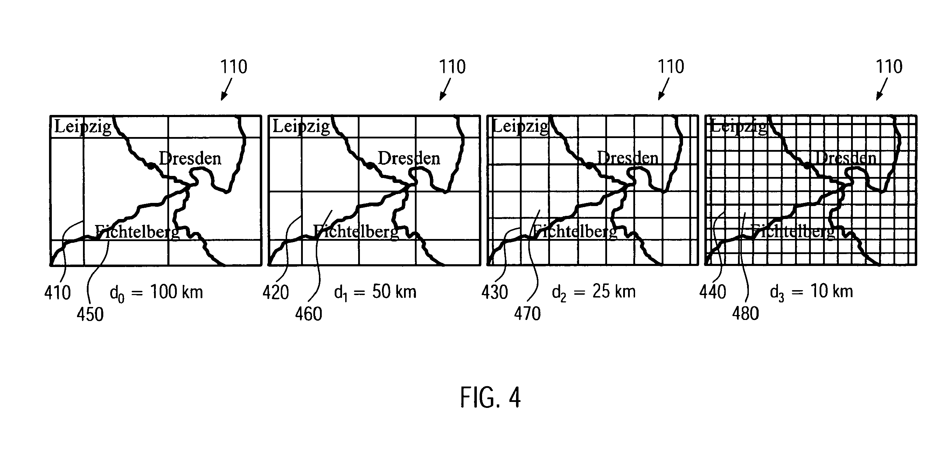

Die Indexiervorrichtung 240 dient dabei dem Zuweisen eines Index zu den Daten des Datenbanksystems 220, wobei geographischen Suchteilbereichen ein Indexelement eines Index zugewiesen wird. Außerdem werden diejenigen geographischen Suchbereiche bestimmt, in denen ein spezifischer geographischer Ort liegt, auf den sich ein spezifisches Datenelement bezieht. Dem Datenelement werden dann die Indexelemente der bestimmten, geographischen Suchbereiche zugeordnet. Figur 3 zeigt in einem Flussdiagramm schematisch die einzelnen Schritte, die gemäß einer bevorzugten Ausführungsform des erfindungsgemäßen Verfahrens zum Indexieren von Daten bzw. eines Teils der Daten des Datenbanksystems 220 durchgeführt werden. Um die Daten bzw. einen Teil der Daten des Datenbanksystems 220 effizient für eine radiusabhängige Umkreissuche zu Indexieren, werden in einem ersten Schritt 310 geographische Gebiete mittels eines Rasters in Bereiche eingeteilt, wobei dieses Raster einen Rasterabstand aufweist, der einem Radius der Umkreissuche zugeordnet ist, dem aber nicht entsprechen muss. Dieser Schritt wird im Bezug auf Figur 4 weiter unten im Text näher erläutert.

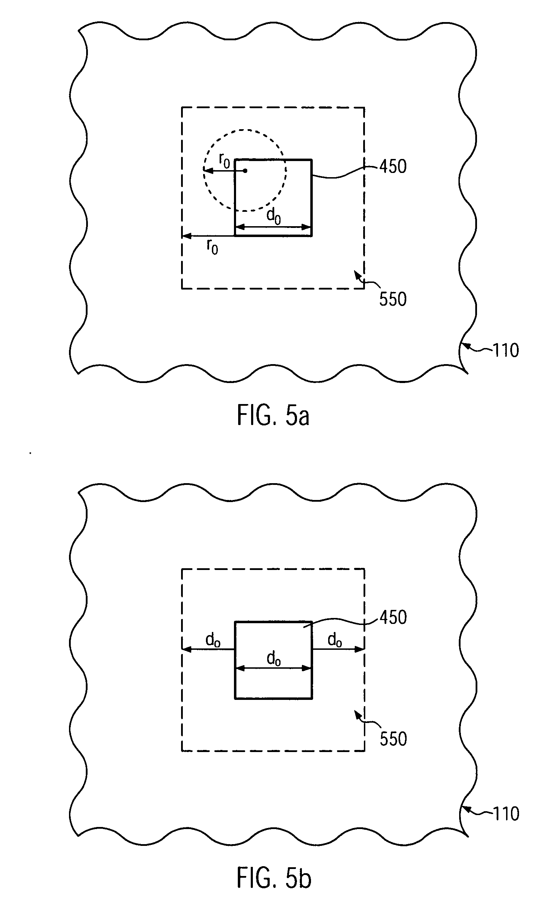

In einem Schritt 320 werden sogenannte Umkreissuchebereiche in Abhängigkeit des Rasterabstandes und des Radius erzeugt, wobei jedem der eingeteilten Bereiche ein entsprechender Umkreissuchebereich zugeordnet wird. Dieser Schritt wird im Detail in Bezug auf Figuren 5a und 5b weiter unten im Text erläutert.

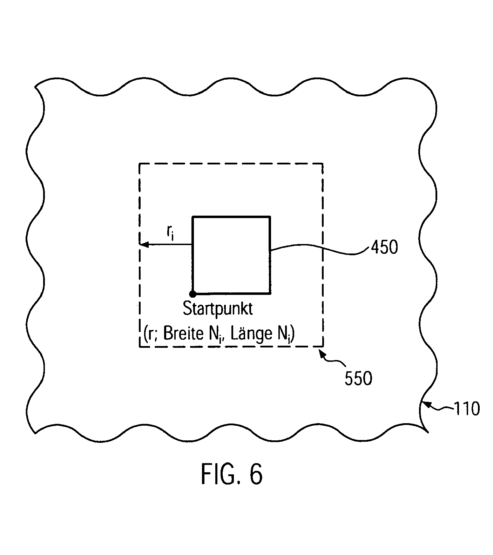

Sofern die Umkreissuchebereiche erzeugt sind, wird ihnen ein spezifischer Index zugeordnet, wobei jedem der erzeugten Umkreissuchebereiche ein Indexelement dieses spezifischen Index zugeordnet wird. Anhand dieses spezifischen Indexes können die Umkreissuchebereiche später einfach zugeordnet bzw. aufgefunden werden. Dieser Schritt 330 wird ebenfalls weiter unten im Text in Bezug auf Figur 6 näher erläutert.

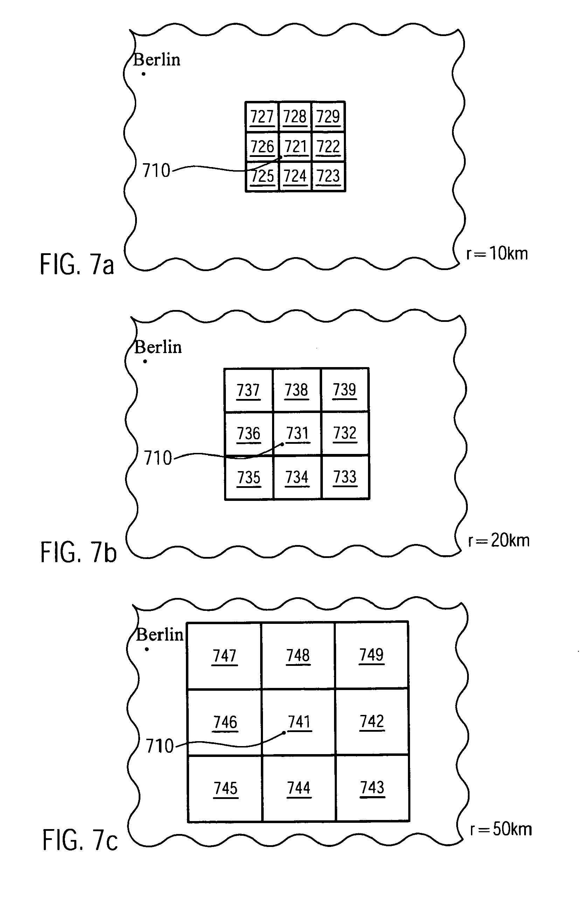

In einem weiteren Schritt 340 werden diejenigen Umkreissuchebereiche bestimmt, in denen ein spezieller geographischer Ort liegt, auf den sich ein spezifisches Datenelement bezieht, das in dem Datenbanksystem 220 gespeichert ist. Ein Datenelement kann dabei ein in dem Datenbanksystem 220 abgelegter Datensatz, eine Information bzw. eine Verweis auf eine Information sein. Schritt 340 wird weiter unten im Text in Bezug auf Figur 7 näher erläutert.

Schließlich umfasst die bevorzugte Ausführungsform des erfindungsgemäßen Verfahrens auch den Schritt 350, in dem die Indexelemente der im Schritt 340 bestimmten Umkreissuchebereiche dem Datenelement zugeordnet werden. Dieser Schritt wird ebenfalls im Detail weiter unten im Text erläutert.

Wie bereits oben erläutert, wird in Schritt 310 ein geographisches Gebiet mittels eines Rasters in Bereiche eingeteilt. Diese Bereiche werden wegen ihrer Form oft auch als Kacheln bezeichnet. Durch diese Einteilung wird jeder geographische Ort in dem geographischen Gebiet eindeutig einem entsprechenden Bereich oder einer entsprechenden Kachel für eine bestimmte Rasterauflösung zugeordnet. Das Raster, das für die Einteilung des geographischen Gebietes verwendet wird, steht dabei in einer Beziehung zu einem der Radien, die bei der Umkreissuche auswählbar sind. Das geographische Gebiet kann dabei z.B. ein beliebige, durch Koordinaten begrenzte Fläche, ein beliebiges Gebiet um eine Stadt, ein Ballungszentrum, ein Bundesland oder einen Staat sein. Somit ist jede durchsuchbare Information in mehreren Kacheln, je nach Suchradius, vorhanden.

Der Begriff Umkreissuche bedeutet dabei eine geographische Suche in Bezug auf einen geographischen Ort oder Punkt oder Lage eines bestimmten Objekts wie z. B. Kino, Museum, Sehenswürdigkeiten usw. Der bei der Umkreissuche durchsuchte geographische Bereich kann dabei ein kreisförmiger Bereich sein oder auch ein rechteckiger bzw. quadratischer Bereich. Die verschiedenen Rastern 410, 420, 430 und 440 und die entsprechenden Umkreissuchebereiche sind bei einer alternativen Ausführungsform rechteckig, wobei die Seiten der Rechtecke der Raster als auch der Umkreissuchebereiche unterschiedlich lang sind.

"Radiusabhängige Umkreissuche" bedeutet dabei, dass eine Umkreissuche durchgeführt wird, bei der zu durchsuchende, geographische Bereich im Wesentlichen durch einen gewählten Radius für den kreisförmigen Bereich oder durch eine dem gewählten Radius äquivalente Kantenlänge für den rechteckigen bzw. quadratischen Bereich um den geographischen Ort oder Punkt definiert ist.

Wie in Figur 4 schematisch gezeigt, wird z.B. ein geographisches Gebiet 110 um Dresden herum mit vier verschiedenen Rastern 410, 420, 430 und 440, die unterschiedliche Raterabstände d₀, d₁, d₂ und d₃ aufweisen, in entsprechend unterschiedliche Bereiche 450, 460, 470 und 480 eingeteilt. In dem ersten Fall wird das geographische Gebiet 110 mit einem Raster 410 in Bereiche 450 eingeteilt. Das Raster 410 weist dabei einen Rasterabstand d₀ von 100 km aufweist. Das Raster 410 hat dabei eine quadratische Form. Alternativ sind außerdem die Einteilungen des geographischen Gebietes 110 mit Rasterabständen d₁, d₂ und d₃ von 50 km, 25 km und 10 km gezeigt.

Die Rasterabstände d₀, d₁, d₂ und d₃ sind dabei bestimmten Radien der Umkreissuche zugeordnet. Bevorzugterweise ist einem Rasterabstand d₀ von 100 km auch ein Radius r₀ von 100 km zugeordnet. Korrespondierend sind bevorzugterweise den Rasterabständen d₁, d₂ und d₃ von 50 km, 25 km und 10 km die Radien r₁, r₂ und r₃ für die Umkreissuche von 50 km, 25 km und 10 km zugeordnet. Alternativ können den jeweiligen Rasterabständen d₀, d₁, d₂ und d₃ von 100 km, 50 km, 25 km und 10 km andere Radien r₀, r₁, r₂ und r₃ für die Umkreissuche zugeordnet werden, wie z.B. 50 km, 25 km, 12,5 km und 5 km.

Bevorzugterweise wird für die Einteilung des geographischen Gebietes 110 in Bereiche 450, 460, 470 und 480 ein quadratisches Raster verwendet. Bevorzugterweise beträgt das Verhältnis des Rasterabstandes dᵢ zum dem Radius rᵢ der entsprechenden Umkreissuche dᵢ/rᵢ = 1. Entsprechend einer weiteren bevorzugten Ausführungsform wird ein Verhältnis von dᵢ/rᵢ = 2 gewählt. Entsprechend der Rechenkapazität des Datenbanksystems 220 können auch andere Verhältnisse gewählt werden. Dies wird in Zusammenhang mit Schritt 320 nochmals genauer erläutert.

Wie aus Figur 4 ersichtlich variiert die Zahl der eingeteilten Bereiche 450, 460, 470 und 480 mit dem Rasterabstand d der Raster 410, 420, 430 und 440. Je kleiner z.B. das Raster 440 gewählt wird, umso größer ist die Anzahl der Bereich 450, 460, 470 und 480, in die das geographische Gebiet 110 eingeteilt wird.

Verfügt das Suchmaschinensystem 200 beispielsweise über eine Umkreissuche mit vier verschiedenen Radien rᵢ, wobei i = 0 ...3, so wird des geographischen Gebietes 110 mit vier verschiedenen Rastern mit den Rasterabständen dᵢ, wobei i = 0 ...3, in jeweils unterschiedliche Bereiche eingeteilt. Für eine Rasterung mit Rasterabstand dᵢ erhält man eine Anzahl Nᵢ von Bereichen mit entsprechender Größe Gᵢ der Bereiche. Je kleiner der Radius rᵢ der Umkreissuche, desto feiner ist die Granularität des eingeteilten geographischen Gebietes 110.

In Schritt 320 werden, wie bereits in Bezug auf Figur 3 erwähnt, sogenannte Umkreissuchebereiche in Abhängigkeit des Rasterabstandes dᵢ und des Radius rᵢ erzeugt, wobei jedem der eingeteilten Bereiche 450, 460, 470 und 480 ein entsprechender Umkreissuchebereich zugeordnet wird.

In Figur 5a ist eine solche Zuordnung eines Umkreissuchebereiches 550 zu einem mittels Rasters eingeteilten Bereiches 450 eines geographischen Gebietes 110 dargestellt. Das Raster, mit dem das geographische Gebiet 110, z.B. Deutschland, eingeteilt wurde, weist einen Rasterabstand d₀ auf. Der Radius für die dazugehörende Umkreissuche ist r₀. Entsprechend wird für die Umkreissuche mit dem Radius r₀ dem eingeteilten Bereich 450 ein entsprechender Umkreissuchebereich 550 zugeordnet werden. Dieser wird bevorzugterweise derart gewählt, dass die Kantenlänge des Umkreissuchebereiches 550 l₀ = d₀ + 2r₀ beträgt.

Die Lage des Umkreissuchbereiches 550 zu dem eingeteilten Bereich 450 ist derart, dass der eingeteilte Bereich 450 mittig in dem Umkreissuchebereich 550 liegt. Das bedeutet, dass bevorzugterweise der Abstand der Außenkante des eingeteilten Bereichs 450 zu der Außenkante des Umkreissuchebereiches 550 einen Abstand aufweist, der gleich dem Radius r₀ ist.

Mit der Zuordnung des Umkreissuchebereiches 550 zu dem eingeteilten Bereich 450 in Abhängigkeit der Parameter d₀ und r₀, wird ein Fläche um den Bereich 450 herum definiert und diesem Bereich 450 zugeordnet, die die Fläche abdeckt, die bevorzugter Weise im Wesentlichen der mit der Umkreissuche mit dem Radius r₀ betroffenen Fläche für den eingeteilten Bereich 450 entspricht.

Wie bereits oben erwähnt, ist in diesem Fall die "Umkreissuche" keine Suche, bei der es sich bei dem Suchbereich um einen Kreis, sondern um ein Rechteck bzw. Quadrat handelt. Die "kreisförmige" Umkreissuche, die in Figur 5a durch die gepunktete Linie dargestellt ist, benötigt, wie bereits oben erläutert, einen hohen Rechenaufwand, der bei stark frequentierten Suchmaschinen allerdings nicht mehr rentabel und effizient zu bewerkstelligen ist. Die Relevanz der Ergebnisse der "rechteckigen" oder "quadratischen" Umkreissuche steht der der "kreisförmigen" Umkreissuche in keinster Weise nach. Außerdem wird bei der bevorzugten Ausführungsform der vorliegenden Erfindung, allen Ortsangaben, die innerhalb des eingeteilten Bereichs 450 liegen, der Umkreissuchebereich 550 zugeordnet.

Figur 5b zeigt eine besonders bevorzugte Ausführungsform, bei der der Rasterabstand d₀ gleich dem Umkreissuchradius r₀ (d₀ = r₀) entspricht. Damit hat der Umkreissuchebereich 550 die dreifache Kantenlänge l₀ (l₀ = 3d₀) des eingeteilten Bereichs 450 und somit die neunfache Fläche des eingeteilten Bereichs 450. Der Umkreissuchebereich 550 ist damit aus dem eingeteilten Bereich 450 und den ihn direkt umgebenden Bereichen zusammengesetzt.

Für den oben beschriebenen Fall einer Umkreissuche mit vier verschiedenen Radien rᵢ, wobei i = 0 ... 3, erfolgt die Zuordnung der Umkreissuchebereiche zu den mittels Raster 410, 420, 430 und 440 eingeteilten Bereiche 450, 460, 470 und 480 und deren Unterbereichen eines geographischen Gebietes 110 für alle rᵢ und dᵢ, wobei i = 0 ... 3. Das heißt, dass jeweils Umkreissuchebereiche für die Parameter d₀ und r₀, d₁ und r₁, d₂ und r₂ und d₃ und r₃ bestimmt werden.

Im Schritt 330 wird den so erzeugten Umkreissuchebereichen ein Index zugeordnet. Dieser Index ist bevorzugterweise eindeutig und bevorzugterweise so aufgebaut, dass er sich einerseits auf den bei der Umkreissuche gewählten Radius rᵢ und damit auch auf den Rasterabstand dᵢ und andererseits auf die eingeteilten Bereiche bezieht, auf die sich die Umkreissuchebereiche beziehen. Eine bevorzugte Ausführungsform dieses Index wird schematisch in Figur 6 dargestellt.

Wie in Figur 6 gezeigt, wird den jeweiligen Umkreissuchebereichen einerseits der Radius rᵢ zugeordnet, der bei der Umkreissuche ausgewählt und der dem Raster entspricht, mit dem das geographische Gebiet 110 in Bereiche eingeteilt wurde. Zum anderen besteht der Index bevorzugterweise aus Längen- und Breitengradangaben der Bereiche, auf die sich die Umkreissuchebereiche beziehen. Der Index hat in der bevorzugten Ausführungsform beispielsweise das Format {*rᵢ*, *Breite_{Nᵢ}*, *Länge_{Nᵢ}*}, wobei für das gewählte Beispiel i = 0 ... 3, Nᵢ die Anzahl der durch das Raster mit dem Rasterabstand dᵢ eingeteilten Bereiche, *Breite_{Nᵢ}* die Breitegradangabe und *Länge_{Nᵢ}* die Längengradangabe der jeweiligen Bereiche ist. Die Längen- und Breitenangaben der jeweiligen Bereiche beziehen sich dabei bevorzugterweise auf einen der Eckpunkte der Bereiche, auch Startpunkt der jeweiligen Bereiche genannt.

Wird z.B. das geographische Gebiet 110 durch ein Raster, das dem Umkreissucheradius r₀ = 10 km zugeordnet ist, in N₀ verschiedene Bereiche eingeteilt, so wird den zugehörigen Umkreissuchebereichen ein Indexelement mit dem Umkreissucheradius 10 km und den jeweiligen Längen- und Breitengraden der Startpunkte der N₀ verschiedenen Bereiche zugeordnet. Die Indexelemente haben damit die Form [10, Breiteⱼ, Längeⱼ], wobei für das gewählte Beispiel j = 0 ... N₀-1. Wurde z.B. ein Bereich mit einem Raster eingeteilt, dem ein Suchradius von 10 km zugeordnet ist, und weist der Bereich einen Startpunkt mit 48.13715° nördlicher Breite und 11.57533° östlicher Länge auf, so wird dem korrespondierenden Umkreissuchebereich das Indexelement [10, 48.13715, 11.57533] zugeordnet. So ist den Umkreissuchebereichen einerseits ein eindeutiger Index zugeordnet. Andererseits kann von dem Längen- und Breitengrad des Startpunktes des jeweiligen Bereichs direkt auf den korrespondierenden Umkreissuchebereich geschlossen werden.

Das Einteilen des geographischen Gebietes mittels unterschiedlicher Raster kann sukzessive erfolgen, z.B. für jeden Umkreissucheradius getrennt. So kann, wenn die Umkreissuche um einen weiteren Radius sozusagen erweitert wird, das geographische Gebiet 110 mit dem neuen Raster eingeteilt, die dazugehörigen Umkreissuchegebiete mittels des neuen Rasters bestimmt und ihnen die entsprechenden Indexelemente zugewiesen werden. Wird z.B. die Umkreissuche mit den Radien r₀ = 100 km, r₁ = 50 km, r₂ = 25 km und r₃ = 10 km geändert in r₀ = 100 km, r₁ = 50 km, r₂ = 35 km, r₃ = 25 km und r₄ = 10 km, so muss nicht der gesamte Index geändert werden, sondern es müssen lediglich die Indexelemente [35, Breiteⱼ, Längeⱼ] ergänzt werden.

Alternativ kann der Index das Format {*rᵢ*, *Nᵢ*} aufweisen. In diesem Fall ist auf Basis der entsprechenden Indexelemente, z.B. [10, 15], kein direkter Rückschluss auf die geographische Lage des entsprechenden Bereichs möglich. Eine solche Indexierung lässt lediglich erkennen, dass es sich um das Indexelement des Umkreissuchebereichs handelt, der dem 15. Bereich der Rastereinteilung für eine Umkreissuche mit Radius 10 km zugeteilt ist.

Da die Einteilung des geographischen Gebietes 110 sowie die Erzeugung der Umkreissuchebereiche und die Zuweisung des entsprechenden Index bevorzugterweise unabhängig von dem Datenbestand des Datenbanksystems 220 ist, können diese Schritte 310, 320 und 330 unabhängig von dem Betrieb des Datenbanksystems 220 durchgeführt werden. Bevorzugterweise werden allerdings die für die Erstellung und Verwaltung des Index benötigten Daten ebenfalls in dem Datenbanksystems 220 abgelegt.

In Schritt 340 werden diejenigen Umkreissuchebereiche bestimmt, in denen ein spezifischer geographischer Ort liegt, auf den sich ein spezifisches Datenelement des Datenbanksystems 220 bezieht. Da die Umkreissuchebereiche größer sind als die korrespondierenden, eingeteilten Bereiche und sich die benachbarten Umkreissuchebereiche somit überlappen können, liegt ein geographischer Ort typischerweise in mehr als einem Umkreissuchebereich. Diese überlappenden Bereiche gilt es zu bestimmen, da der entsprechende geographische Ort somit von mehreren verschiedenen Umkreissuchen betroffen sein kann. Dies betrifft nicht nur die Umkreissuchen mit verschiedenen Radien sondern auch Umkreissuchen mit ein und demselben Radius.

Wie z.B. in Figuren 7a, b und c schematisch dargestellt, bezieht sich ein Datenelement einer in dem Datenbanksystem 220 gespeicherten Information auf einen spezifischen Ort 710 südwestlich von Berlin. Zusätzlich sind entsprechend der besonders bevorzugten Ausführungsform Bereiche eingezeichnet, die den Suchradien 10 km, 20 km und 50 km zugeordnet sind. Entsprechend der besonders bevorzugten Ausführungsform, bei der das Verhältnis Gitterabstand zu Umkreissucheradius d/r = 1 ist, ist der Rasterabstand, mittels dem die entsprechenden Bereiche eingeteilt worden sind, ebenfalls 10 km, 20 km und 50 km. Der Einfachheit halber sind nur die Bereiche dargestellt, in denen der spezifischen Ort liegt, sowie die direkt angrenzenden Bereiche. Figur 7a bezieht sich dabei auf das Rastermaß von 10 km, Figur 7b auf das Rastermaß 20 km und Figur 7c auf das Rastermaß 50 km. Wie bereits oben erläutert, ist der Umkreissuchebereich in der besonders bevorzugten Ausführungsform neunmal so groß, wie der korrespondierende eingeteilte Bereich, da die Kantenlänge des Umkreissuchebereichs die dreifache Kantenlänge des eingeteilten Bereichs aufweist. Dementsprechend liegt der dem Datenelement zugeordnete Ort 710 nicht nur in dem Umkreissuchebereich des Bereichs 721, sondern auch in den Umkreissuchebereichen der Bereiche 722 bis 729. Aufgrund des speziellen Verhältnisses von Gitterabstand und Umkreissucheradius zueinander, befindet sich der Ort 710 in insgesamt 9 Umkreissuchebereichen. Dies betrifft übrigens nicht nur den Punkt 710 alleine, sondern alle Orte, die innerhalb des Bereiches 721 liegen. Dementsprechend einfach können dann Datenelemente, die sich auf Orte beziehen, die innerhalb eines bestimmten Bereiches liegen, für die Umkreissuche referenziert werden, wie weiter unten im Text noch im Detail erläutert wird.

Für den Fall, dass das Verhältnis Gitterabstand zu Umkreissucheradius d/r = 2 ist, liegt jeder geographische Ort eines entsprechenden Bereiches nur noch in vier verschiedenen Umkreissuchebereichen gleichzeitig. In diesem Fall kann allerdings nicht mehr davon ausgegangen werden, dass alle Punkte in einem entsprechenden Bereich auch gleichzeitig in den vier gleichen Umgebungsbereichen liegen. In diesem Fall muss je nach Lage des geographischen Ortes in dem eingeteilten Bereich bestimmt werden, zu welchen vier Umgebungssuchebereichen ein bestimmter Ort zuzurechnen ist.

Bei der in den Figuren 7a, 7b und 7c gezeigten besonders bevorzugten Ausführungsform befindet sich der Ort 710 für jedes Rastermaß in jeweils 9 Bereichen. Bei drei verschiedenen Umkreissucheradien und damit drei verschiedenen Rastermaßen befindet sich der Ort 710 somit in 27 verschiedenen Umkreissuchebereichen. Für vier bzw. fünf Umkreissucheradien befände sich der Ort 710 somit in 36 bzw. 45 Umkreissuchebereichen. Entsprechend der Anzahl von Umkreissucheradien und dem Verhältnis von Rastermaß zu Umkreissucheradius d/r wird somit eine Vielzahl von Umkreissucheradien bestimmt, in dem der spezifische geographische Ort 710 liegt.

Sind diejenigen Umkreissuchebereiche bestimmt, in denen der spezifische geographische Ort 710 liegt, können durch eine entsprechende Referenzierung dem Datenelement, das sich auf den spezifischen geographischen Ort 710 bezieht, die in Schritt 340 bestimmten Umkreissuchebereiche zugeordnet werden. Dies geschieht bevorzugterweise dadurch, dass die Indexelemente dieser Umkreissuchebereiche dem Datenelement zugeordnet werden. In dem in Figuren 7a bis 7c gezeigten Fall von drei verschiedenen Umkreissucheradien 10 km, 20 km und 50 km sind dies 27 Indexelemente für die 27 verschiedene Umkreissuchebereiche.

Alternativ können die Datenelemente des Datenbanksystems 220 derart für die Umkreissuche referenziert werden, dass einem Datenelement ein Verweis oder auch Pointer zugeordnet wird, der auf die Bereiche verweist in denen der Ort liegt, auf den sich das Datenelement bezieht. Den Bereichen sind dann wiederum Verweise oder Pointer zugeordnet, die auf die Umkreissuchebereiche verweisen, in denen die Bereiche liegen.

In den obigen Beispielen werden Umkreissuchen mit Radien in der Größenordnung von km angegeben. Aber gerade in Ballungszentren ist es erforderlich, deutlich detailliertere Umkreissuchen durchzuführen, da interessierende geographische Orte, auf die sich Informationen beziehen können, deutlich näher beieinander liegen. In diesem Fall kann der Umkreissucheradius nur einige hundert Meter oder sogar noch weniger betragen. Dadurch wird das Rastermaß des Rasters deutlich kleiner und die Anzahl der eingeteilten Bereiche steigt damit ebenfalls deutlich. Allerdings ist in der besonders bevorzugten Ausführungsform, für d/r = 1 d.h. Rastermaß gleich Umkreissucheradius, der Rechenaufwand für das Bestimmen der entsprechenden Umkreissuchebereiche und das Zuordnen der Indexelemente der bestimmten Umkreissuchebereiche im Wesentlichen gleich. Allen Datenelementen, die sich auf Orte innerhalb des Bereiches 721 bzw. 731 und 741 beziehen, können die Indexelemente der zu den Bereichen 721 bis 729 bzw. 731 bis 739 und 741 bis 749 gehörenden Umkreissuchebereiche zugeordnet werden.

Bevorzugterweise werden die Bereiche bzw. Kacheln 721 bis 729 bzw. 731 bis 739 und 741 bis 749 entsprechend dem korrespondierenden Rasterabstand dᵢ bzw. Umkreissucheradius rᵢ benamt oder kodiert. Die Benamung der Bereiche kann bevorzugterweise dabei an dem Index für die Umkreissuchebereiche angelehnt sein. Beispielsweise werden die Bereich in dem Format {*rᵢ*, *Breite_{Nᵢ}*, *Länge_{Nᵢ}*} benamt, wobei für das gewählte Beispiel i = 0 ... 3, Nᵢ die Anzahl der durch das Raster mit dem Rasterabstand dᵢ eingeteilten Bereiche, *Breite_{Nᵢ}* die Breitegradangabe und *Länge_{Nᵢ}* die Längengradangabe des Mittelpunkts oder eines der Eckpunkte der jeweiligen Bereiche ist. So für die Benamung der Bereiche z.B. die Längen- und Breitengradangaben der Mittelpunkte der jeweiligen Bereiche verwendet werden, kann sehr schnell der nächst größere Bereich zu dem Bereich {*rᵢ*, *Breite_{Nᵢ}*, *Länge_{Nᵢ}*} gefunden werden, indem der nächst größere Umkreissucheradius rᵢ₋₁ gewählt wird und der größere Bereich für rᵢ₋₁ gesucht wird der in etwa der Längen- und Breitengradangabe {*Breite_{Nᵢ}*, *Länge_{Nᵢ}*} entspricht. Korrespondierend kann der nächst kleinere Bereich zu dem Bereich {*rᵢ*, *Breite_{Nᵢ}*, *Länge_{Nᵢ}*} gefunden werden, indem der nächst kleinere Umkreissucheradius rᵢ₊₁ gewählt wird und der kleinere Bereich für rᵢ₊₁ gesucht wird der in etwa der Längen- und Breitengradangabe {*Breite_{Nᵢ}*, *Länge_{Nᵢ}*} entspricht.

Da den Datenelementen, sofern sie sich auf einen Ort in dem geographischen Bereich beziehen, in dem Datenbanksystem 220 nur entsprechende Indexelemente für die Umkreissuche zugeordnet sind, muss in dem Datenbanksystem 220 nur wenig zusätzliche Information für die Umkreissuche abgespeichert werden. Da anhand des verwendeten Index diejenigen Datenelemente sehr einfach bestimmt werden können, die in einem "Umkreis" zu einem bestimmten Ort in Beziehung stehen, sind Datenbankabfragen auf Basis der verwendeten Indexierung äußerst performant. Sie bedürfen weniger Operationen und verwenden ein Minimum an Operanten. Damit ermöglicht die erfindungsgemäße Indexierung der Datenelemente in dem Datenbanksystem 220 ein Suchmaschinensystem 200, das eine Vielzahl von gleichzeitigen Benutzeranfragen performant bewältigen kann. Der verwendete Index ist dabei leicht lesbar und einfach verifizierbar. Darüber hinaus ist er vorwärtskompatibel und einfach erweiterbar.

Darüber hinaus ist die erfindungsgemäße Indexierung der Daten so ausgelegt, dass sie während des normalen Datenbankbetriebes automatisch durchgeführt werden kann. Werden im Laufe des Datenbankbetriebes weitere Daten in das Datenbanksystem 220 eingepflegt, z.B. über den Crawler 230, so kann bevorzugterweise die Zuordnung der Indexelemente der jeweiligen Umkreissuchebereiche zu den neuen Datenelementen während des Einpflegens der neuen Datenelemente in das Datenbanksystem 220 erfolgen. Das erfindungsgemäße Indizierverfahren kann auch bei bestehenden Datenbanksystemen verwendet werden und deren Datenbestand auf die erfindungsgemäße Weise nachträglich Indexieren.

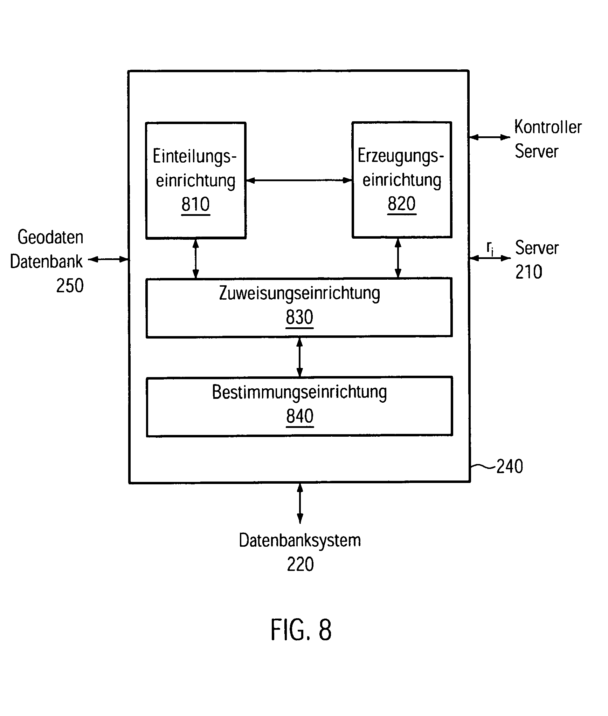

Wie in Figur 8 schematisch dargestellt, umfasst die erfindungsgemäße Indexiervorrichtung 240 eine Einrichtung 810 zum Einteilen des geographischen Gebietes mittels eines Rasters in Bereiche. Die Einrichtung 810 ist dabei so eingerichtet, dass sie die Rasterung in Abhängigkeit eines für die Umkreissuche gewählten Radius vornehmen kann. Die Information über die Anzahl der verschiedenen Umkreissucheradien sowie deren Radien erhält die erfindungsgemäße Indexiervorrichtung 240 bevorzugterweise von dem Server 210 bzw. durch eine entsprechende Abfrage bei dem Server 210. Darüber hinaus verfügt die erfindungsgemäße Indexiervorrichtung 240 in einer bevorzugten Ausführungsform über eine Schnittstelle zu der Datenbank 250 mit Geoinformationen. Über diese Schnittstelle kann sich die Indexiervorrichtung 240 und insbesondere die Einrichtung 810 zum Einteilen eines geographischen Gebietes die benötigten Informationen, wie z.B. Geodaten, Bitmaps, usw., von der Datenbank 250 für Geoinformationen beschaffen, um das geographische Gebiet entsprechend den unterschiedlichen Rastermaßen in entsprechende unterschiedliche Bereiche einzuteilen.

Außerdem umfasst die bevorzugte Ausführungsform der erfindungsgemäßen Indexiervorrichtung 240 eine Einrichtung 820 zum Erzeugen von Umkreissuchebereichen in Abhängigkeit des Rasterabstandes und des Radius der Umkreissuche. Die auf Basis der vom Server 210 und der Datenbank 250 erhaltenen Informationen berechneten Umkreissuchebereiche werden von der Einrichtung 820 den jeweiligen Bereichen zugeordnet.

Die Einrichtung 830 zum Zuweisen eines Index zu den Umkreissuchebereichen ist bevorzugterweise derart ausgelegt, dass sie auf Basis der unterschiedlichen Umkreissucheradien einen Index erstellt und die Indexelemente den jeweiligen Umkreissuchebereichen zuweist.

Schließlich weist die erfindungsgemäße Indexiervorrichtung 240 eine Einrichtung 840 zum Bestimmen derjenigen Umkreissuchebereiche auf, in denen spezifische geographische Orte liegen, auf die sich spezifische Datenelemente beziehen. Hierfür weist die Indexiervorrichtung 240 eine Schnittstelle zum Datenbanksystem 220 auf, über die diejenigen spezifischen Datenelemente ermittelt werden können, die sich auf spezifische geographische Orte beziehen. Einrichtung 840 ist darüber hinaus ausgelegt, die Datenelemente auf die Umkreissuchebereiche zu referenzieren, in denen die geographischen Orte liegen, auf die sich die vorliegenden Datenelemente beziehen. Die Einrichtung 840 ist dabei so eingerichtet, dass dieses Zuweisen der Indexelemente der bestimmten Umkreissuchebereiche zu den Datenelementen während des regulären Betriebs des Datenbanksystems 220 durchgeführt werden kann.

Mit der erfindungsgemäßen Indexiervorrichtung sowie dem erfindungsgemäßen Verfahren zum Indexieren von Daten einer Datenbank für radiusabhängige Umkreissuchen können äußerst performante Umkreissucheabfragen durchgeführt werden, wie im Folgenden näher erläutert wird.

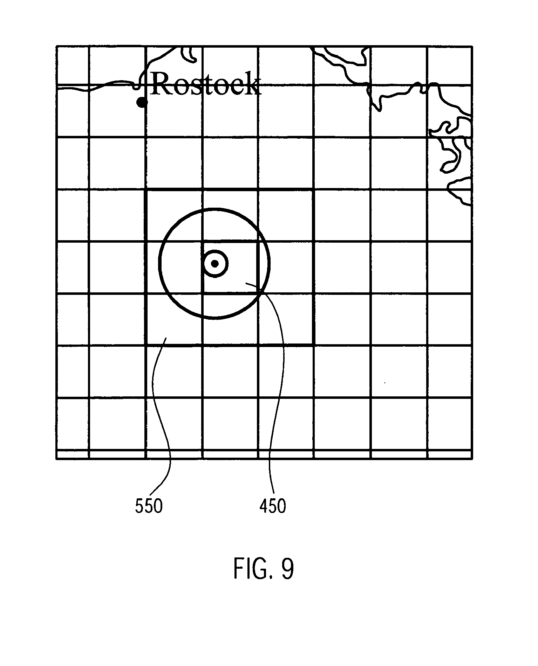

Wie in Figur 9 schematisch gezeigt, soll zu einem bestimmten Ort südlich von Rostock eine bestimmte Information ermittelt werden. Beispielsweise soll in Erfahrung gebracht werden, welche Hotels im Umkreis mit dem Radius r₀ des eingezeichneten Ortes recherchierbar sind. Der Radius r₀ der ausgewählten Umkreissuche ist dem Server 210 bekannt. Auf Basis dieses Radius r₀ kann der Server 210 das entsprechende Rastersystem ermitteln, das dem Umkreissucheradius r₀ entspricht. Ist dieses Rastersystem ermittelt, kann z.B. über ein Softwaremodul berechnet werden, in welchem durch das Rastersystem eingeteilten Gebiet der Ort liegt, um den die Umkreissuche durchgeführt werden soll.

Gemäß der besonders bevorzugten Ausführungsform werden der Längen- und Breitengrad (*Breiteⱼ*, *Längeⱼ*) des Startpunkts dieses Gebiets 450 für das Indexelement des korrespondierenden Umkreissuchegebietes verwendet. Somit erhält man das Indexelement [r₀, Breiteⱼ, Längeⱼ] für das korrespondierende Umkreissuchegebiet 550.

Um nun alle Datenelemente zu erhalten, die sich auf einen geographischen Ort in dem Umkreissuchegebiet mit dem Indexelement [r₀, Breiteⱼ, Längeⱼ] beziehen, müssen nun lediglich die Datenelemente in dem Datenbanksystem 220 abgefragt werden, die einen Verweis auf das Indexelement [r₀, Breiteⱼ, Längeⱼ] aufweisen bzw. dieses Indexelement Hotel beinhalten. Das Ergebnis kann dann zusätzlich nach einem weiteren Kriterium wie z.B. Sauna gefiltert werden. Alternativ, kann das Datenbanksystem 220 zuerst nach Datenelementen durchsucht werden, die ein bestimmtes Kriterium wie z.B. Hotel erfüllen, und dann die Ergebnisse nach einem Bezug auf das Indexelement [r₀, Breiteⱼ, Längeⱼ] durchsucht und ausgewertet werden.

Diese Art der Datenbankabfrage ist eine einfache Datenbankabfrage, bei der keine komplexen Berechnungen durchgeführt werden müssen, wie z.B. Abstand zum Ausgangsort der Umkreissuche. Damit ermöglicht es die erfindungsgemäße Indexiervorrichtung sowie das korrespondierende Verfahren, eine detaillierte und gleichzeitig schnelle Umkreissucheabfrage anzubieten, die auch bei stark frequentierten Suchmaschinen zuverlässig funktioniert.

## Patentansprüche

1. Verfahren zum Zuweisen eines Index zu Daten einer Datenbank mit folgenden Schritten:
Zuweisen jeweils eines Indexelements eines ersten Index zu jeweils einem Suchbereich von einer Anzahl von ersten geographischen Suchbereichen;
Bestimmen derjenigen ersten geographischen Suchbereiche, in denen ein spezifischer geographischer Ort liegt, auf den sich ein spezifisches Datenelement bezieht; und
Zuordnen der Indexelemente der bestimmten, ersten, geographischen Suchbereiche zu dem Datenelement.

2. Verfahren nach Anspruch 1, wobei ein geographisches Gebiet mittels eines ersten Rasters in erste Bereiche eingeteilt wird und das erste Raster einen ersten Rasterabstand aufweist, der einem ersten Radius der Umkreissuche zugeordnet ist.

3. Verfahren nach Anspruch 1 oder 2, wobei jedem der ersten Bereiche ein entsprechender erster geographischer Suchebereich zugeordnet ist und die ersten Suchebereiche in Abhängigkeit des ersten Rasterabstandes und des ersten Radius erzeugt werden.

4. Verfahren nach einem der Ansprüche 1 bis 3, des Weiteren umfassend:
Einteilen des geographischen Gebietes mittels eines zweiten Rasters in zweite Bereiche, wobei das zweite Raster einen zweiten Rasterabstand aufweist, der einem zweiten Radius der Umkreissuche zugeordnet ist;
Erzeugen von zweiten geographischen Suchebereichen in Abhängigkeit des zweiten Rasterabstandes und des zweiten Radius, wobei jedem der zweiten Bereiche ein entsprechender zweiter geographischer Suchebereich zugeordnet ist;
Zuweisen eines zweiten Index zu den zweiten geographischen Suchebereichen, wobei jedem der zweiten geographischen Suchebereiche ein Indexelement des zweiten Index zugewiesen wird;
Bestimmen derjenigen zweiten geographischen Suchebereiche, in denen der spezifische geographische Ort liegt; und
Zuordnen der Indexelemente der bestimmten zweiten geographischen Suchebereiche zu dem Datenelement.

5. Verfahren nach einem der Ansprüche 1 bis 4, wobei das erste Raster ein quadratisches Raster ist und sich der dem jeweiligen ersten Bereich zugeordnete erste geographische Suchebereich über den jeweiligen ersten Bereich auf allen vier Seiten um Länge des ersten Radius erstreckt, und/oder das zweite Raster ein quadratisches Raster ist und sich der dem jeweiligen zweiten Bereich zugeordnete zweite geographische Suchebereich über den jeweiligen zweiten Bereich auf allen vier Seiten um Länge des zweiten Radius erstreckt.

6. Verfahren nach einem der Ansprüche 1 bis 5, wobei der erste Rasterabstand gleich dem ersten Radius der Umkreissuche und/oder der zweite Rasterabstand gleich dem zweiten Radius der Umkreissuche ist.

7. Verfahren nach einem der Ansprüche 1 bis 6, wobei der erste und/oder zweite Index Angaben umfasst, die sich auf den dem Radius zugeordneten Rasterabstand und eine geographische Zuordnung der ersten und/oder zweiten Bereiche beziehen.

8. Verfahren nach einem der Ansprüche 1 bis 7, wobei jedem der für die radiusabhängige Umkreissuche verwendeten Radien jeweils ein Raster mit einem entsprechenden Rasterabstand zugeordnet ist.

9. Verfahren nach einem der Ansprüche 1 bis 8, wobei das Datenelement Teil eines Datensatzes einer Adressdatenbank oder eines Index ist.

10. Verfahren nach einem der Ansprüche 1 bis 9, wobei das Datenelement Teil eines Datensatzes ist, der mit einer Adressdatenbank verknüpft ist.

11. Vorrichtung zum Zuweisen eines Index zu Daten einer Datenbank umfassend:
eine Einrichtung zum Zuweisen eines ersten Index zu ersten geographischen Suchebereichen, wobei die Einrichtung zum Zuweisen eingerichtet ist, jedem der ersten geographischen Suchebereiche jeweils ein Indexelement des ersten Index zuzuweisen; und
eine Einrichtung zum Bestimmen derjenigen ersten geographischen Suchebereiche, in denen ein spezifischer geographischer Ort liegt, auf den sich ein spezifisches Datenelement bezieht, und zum Zuweisen der Indexelemente der bestimmten ersten geographischen Suchebereiche zu dem Datenelement.

12. Vorrichtung nach Anspruch 11, zusätzlich umfassend:
eine Einrichtung zum Einteilen eines geographischen Gebietes mittels eines ersten Rasters in erste Bereiche, wobei das erste Raster einen ersten Rasterabstand aufweist, der einem ersten Radius der Umkreissuche zugeordnet ist; und
eine Einrichtung zum Erzeugen von der ersten geographischen Suchebereichen in Abhängigkeit des ersten Rasterabstandes und des ersten Radius, wobei die Einrichtung zum Erzeugen von ersten geographischen Suchebereichen eingerichtet ist, jedem der ersten Bereiche einen entsprechenden ersten geographischen Suchebereich zuzuordnen.

13. Vorrichtung nach Anspruch 11 oder 12, wobei die Einrichtung zum Einteilen zusätzlich dazu eingerichtet ist, das geographische Gebiet mittels eines zweiten Rasters in zweite Bereiche einzuteilen, wobei das zweite Raster einen zweiten Rasterabstand aufweist, der einem zweiten Radius der Umkreissuche zugeordnet ist, wobei die Einrichtung zum Erzeugen von ersten geographischen Suchebereichen zusätzlich dazu eingerichtet ist zweite geographische Suchebereiche in Abhängigkeit des zweiten Rasterabstandes und des zweiten Radius zu erzeugen, wobei jedem der zweiten Bereiche ein entsprechender zweiter geographischer Suchebereich zugeordnet ist, wobei die Einrichtung zum Zuweisen zusätzlich dazu eingerichtet ist, einen zweiten Index zu den zweiten geographischen Suchebereichen zuzuweisen, wobei jedem der zweiten geographischen Suchebereiche ein Indexelement des zweiten Index zugeordnet wird, und wobei die Einrichtung zum Bestimmen der ersten geographischen Suchebereiche zusätzlich dazu eingerichtet ist, diejenigen zweiten geographischen Suchebereiche zu bestimmen, in denen der spezifische geographische Ort liegt, und die Indexelemente der bestimmten zweiten geographischen Suchebereiche dem Datenelement zuzuordnen.

14. Vorrichtung nach einem der Ansprüche 11 bis 13, wobei das erste Raster ein quadratisches Raster ist und sich der dem jeweiligen ersten Bereich zugeordnete erste geographische Suchebereich über den jeweiligen ersten Bereich auf allen vier Seiten um Länge des ersten Radius erstreckt, und/oder das zweite Raster ein quadratisches Raster ist und sich der dem jeweiligen zweiten Bereich zugeordnete zweite geographische Suchebereich über den jeweiligen zweiten Bereich auf allen vier Seiten um Länge des zweiten Radius erstreckt.

15. Vorrichtung nach einem der Ansprüche 11 bis 14, wobei der erste Rasterabstand gleich dem ersten Radius der Umkreissuche und/oder der zweite Rasterabstand gleich dem zweiten Radius der Umkreissuche ist.

16. Vorrichtung nach einem der Ansprüche 11 bis 15, wobei der erste und/oder zweite Index Angaben umfasst, die sich auf den dem Radius zugeordneten Rasterabstand und eine geographische Zuordnung der ersten und/oder zweiten Bereiche beziehen.

17. Vorrichtung nach einem der Ansprüche 11 bis 16, wobei jedem der für die radiusabhängige Umkreissuche verwendeten Radien jeweils ein Raster mit einem entsprechenden Rasterabstand zugeordnet ist.

## Geänderte Patentansprüche

### Geänderte Patentansprüche gemäss Regel 137(2) EPÜ.

**1.** Verfahren zum Zuweisen eines Index zu Daten einer rechnerbasierten Datenbank mit folgenden Schritten:
Einteilen eines geographischen Gebietes mittels eines ersten Rasters in erste Bereiche, wobei das erste Raster einen ersten Rasterabstand aufweist, der einem ersten Radius einer Umkreissuche zugeordnet ist,
Zuweisen jeweils eines Indexelements eines ersten Index zu jeweils einem Umkreissuchebereich von einer Anzahl von ersten Umkreissuchebereichen;
Bestimmen derjenigen ersten Umkreissuchebereiche, in denen ein spezifischer geographischer Ort liegt, auf den sich ein spezifisches Datenelement bezieht; und
Zuordnen der Indexelemente der bestimmten, ersten Umkreissuchebereiche zu dem Datenelement,
wobei jedem der ersten Bereiche ein entsprechender erster Umkreissuchebereich zugeordnet ist, die ersten Umkreissuchebereiche in Abhängigkeit des ersten Rasterabstandes und des ersten Radius erzeugt werden, und wobei das Indexelement des ersten Index ein Element eines Schlüssels des ersten Index ist.

**2.** Verfahren nach Anspruch 1, des Weiteren umfassend:
Einteilen des geographischen Gebietes mittels eines zweiten Rasters in zweite Bereiche, wobei das zweite Raster einen zweiten Rasterabstand aufweist, der einem zweiten Radius der Umkreissuche zugeordnet ist;
Erzeugen von zweiten Umkreissuchebereichen in Abhängigkeit des zweiten Rasterabstandes und des zweiten Radius, wobei jedem der zweiten Bereiche ein entsprechender zweiter Umkreissuchebereich zugeordnet ist;
Zuweisen eines zweiten Index zu den zweiten Umkreissuchebereichen, wobei jedem der zweiten Umkreissuchebereiche ein Indexelement des zweiten Index zugewiesen wird;
Bestimmen derjenigen zweiten Umkreissuchebereiche, in denen der spezifische geographische Ort liegt; und
Zuordnen der Indexelemente der bestimmten zweiten Umkreissuchebereiche zu dem Datenelement,
wobei das Indexelement des zweiten Index ein Element eines Schlüssels des zweiten Index ist.

**3.** Verfahren nach einem der Ansprüche 1 oder 2, wobei das erste Raster ein quadratisches Raster ist und sich der dem jeweiligen ersten Bereich zugeordnete erste Umkreissuchebereich über den jeweiligen ersten Bereich auf allen vier Seiten um Länge des ersten Radius erstreckt, und/oder das zweite Raster ein quadratisches Raster ist und sich der dem jeweiligen zweiten Bereich zugeordnete zweite Umkreissuchebereiche über den jeweiligen zweiten Bereich auf allen vier Seiten um Länge des zweiten Radius erstreckt.

**4.** Verfahren nach einem der Ansprüche 1 bis 3, wobei der erste Rasterabstand gleich dem ersten Radius der Umkreissuche und/oder der zweite Rasterabstand gleich dem zweiten Radius der Umkreissuche ist.

**5.** Verfahren nach einem der Ansprüche 1 bis 4, wobei der Schlüssel des ersten und/oder zweiten Index Angaben umfasst, die sich auf den dem Radius zugeordneten Rasterabstand und eine geographische Zuordnung der ersten und/oder zweiten Bereiche beziehen.

**6.** Verfahren nach einem der Ansprüche 1 bis 5, wobei jedem der für die radiusabhängige Umkreissuche verwendeten Radien jeweils ein Raster mit einem entsprechenden Rasterabstand zugeordnet ist.

**7.** Verfahren nach einem der Ansprüche 1 bis 6, wobei das Datenelement Teil eines Datensatzes einer Adressdatenbank oder eines Index ist.

**8.** Verfahren nach einem der Ansprüche 1 bis 7, wobei das Datenelement Teil eines Datensatzes ist, der mit einer Adressdatenbank verknüpft ist.

**9.** Vorrichtung zum Zuweisen eines Index zu Daten einer Datenbank umfassend:
eine Einrichtung zum Einteilen eines geographischen Gebietes mittels eines ersten Rasters in erste Bereiche, wobei das erste Raster einen ersten Rasterabstand aufweist, der einem ersten Radius einer Umkreissuche zugeordnet ist;
eine Einrichtung zum Erzeugen von ersten Umkreissuchebereichen in Abhängigkeit des ersten Rasterabstandes und des ersten Radius, wobei die Einrichtung zum Erzeugen von ersten Umkreissuchebereichen eingerichtet ist, jedem der ersten Bereiche einen entsprechenden ersten Umkreissuchebereich zuzuordnen
eine Einrichtung zum Zuweisen eines ersten Index zu den ersten Umkreissuchebereichen, wobei die Einrichtung zum Zuweisen eingerichtet ist, jedem der ersten Umkreissuchebereiche jeweils ein Indexelement des ersten Index zuzuweisen; und
eine Einrichtung zum Bestimmen derjenigen ersten Umkreissuchebereiche, in denen ein spezifischer geographischer Ort liegt, auf den sich ein spezifisches Datenelement bezieht, und zum Zuweisen der Indexelemente der bestimmten ersten Umkreissuchebereiche zu dem Datenelement,
wobei das Indexelement des ersten Index ein Element eines Schlüssels des ersten Index ist.

**10.** Vorrichtung nach Anspruch 9, wobei die Einrichtung zum Einteilen zusätzlich dazu eingerichtet ist, das geographische Gebiet mittels eines zweiten Rasters in zweite Bereiche einzuteilen, wobei das zweite Raster einen zweiten Rasterabstand aufweist, der einem zweiten Radius der Umkreissuche zugeordnet ist, wobei die Einrichtung zum Erzeugen von ersten Umkreissuchebereichen zusätzlich dazu eingerichtet ist zweite Umkreissuchebereiche in Abhängigkeit des zweiten Rasterabstandes und des zweiten Radius zu erzeugen, wobei jedem der zweiten Bereiche ein entsprechender zweiter Umkreissuchebereiche zugeordnet ist, wobei die Einrichtung zum Zuweisen zusätzlich dazu eingerichtet ist, einen zweiten Index zu den zweiten Umkreissuchebereichen zuzuweisen, wobei jedem der zweiten Umkreissuchebereiche ein Indexelement des zweiten Index zugeordnet wird, und wobei die Einrichtung zum Bestimmen der ersten Umkreissuchebereiche zusätzlich dazu eingerichtet ist, diejenigen zweiten Umkreissuchebereiche zu bestimmen, in denen der spezifische geographische Ort liegt, und die Indexelemente der bestimmten zweiten Umkreissuchebereiche dem Datenelement zuzuordnen, wobei das Indexelement des zweiten Index ein Element eines Schlüssels des zweiten Index ist.

**11.** Vorrichtung nach einem der Ansprüche 9 oder 10, wobei das erste Raster ein quadratisches Raster ist und sich der dem jeweiligen ersten Bereich zugeordnete erste Umkreissuchebereich über den jeweiligen ersten Bereich auf allen vier Seiten um Länge des ersten Radius erstreckt, und/oder das zweite Raster ein quadratisches Raster ist und sich der dem jeweiligen zweiten Bereich zugeordnete zweite Umkreissuchebereich über den jeweiligen zweiten Bereich auf allen vier Seiten um Länge des zweiten Radius erstreckt.

**12.** Vorrichtung nach einem der Ansprüche 9 bis 11, wobei der erste Rasterabstand gleich dem ersten Radius der Umkreissuche und/oder der zweite Rasterabstand gleich dem zweiten Radius der Umkreissuche ist.

**13.** Vorrichtung nach einem der Ansprüche 9 bis 12, wobei der erste und/oder zweite Index Angaben umfasst, die sich auf den dem Radius zugeordneten Rasterabstand und eine geographische Zuordnung der ersten und/oder zweiten Bereiche beziehen.

**14.** Vorrichtung nach einem der Ansprüche 9 bis 13, wobei jedem der für die radiusabhängige Umkreissuche verwendeten Radien jeweils ein Raster mit einem entsprechenden Rasterabstand zugeordnet ist.
